# EUROPÄISCHE PATENTSCHRIFT

(11) **EP 3 788 807 B1**
(45) Veröffentlichungstag und Bekanntmachung des Hinweises auf die Patenterteilung: **15.11.2023**
(21) Anmeldenummer: 19729641.1
(22) Anmeldetag: 24.05.2019
(51) Int. Cl.: H04W 4/70, H04W 12/50, H04W 12/00, H04W 4/08

(54) **VERFAHREN ZUM EINRICHTEN EINES KOMMUNIKATIONSKANALS ZWISCHEN EINEM DATENGERÄT UND EINEM ENDGERÄT EINES BENUTZERS**
METHOD FOR SETTING UP A COMMUNICATION CHANNEL BETWEEN A DATA DEVICE AND A TERMINAL OF A USER
PROCÉDÉ POUR ÉTABLIR UN CANAL DE COMMUNICATION ENTRE UN DISPOSITIF DE DONNÉES ET UN TERMINAL D'UN UTILISATEUR

(30) Priorität: 15.06.2018 DE 102018209690
(43) Veröffentlichungstag der Anmeldung: 10.03.2021
(73) Patentinhaber: Siemens Aktiengesellschaft, 80333 München (DE)
(72) Erfinder: LANGEN, Manfred, 81827 München (DE)
(74) Vertreter: Siemens Patent Attorneys
(86) Internationale Anmeldenummer: PCT/EP2019/063494
(87) Internationale Veröffentlichungsnummer: WO 2019/238391

(56) Entgegenhaltungen:
- WO-A1-2015/085910
- WO-A1-2017/080403

## Beschreibung

Die Erfindung betrifft ein Verfahren zum Einrichten eines Kommunikationskanals zwischen einem Datengerät und einem Endgerät eines Benutzers.

In vielen technischen Anwendungen besteht die Notwendigkeit, dass ein Benutzer Zugriff auf Datengeräte hat, um Daten aus diesen Geräten auszulesen bzw. diese Geräte zu konfigurieren. Um diesen Zugriff zu ermöglichen, werden im Stand der Technik meist proprietäre Schnittstellen genutzt, über welche der Benutzer unter Zwischenschaltung eines Endgeräts Zugriff auf das Datengerät erhält. Die Verwendung von proprietären Schnittstellen führt zu einem erhöhten technischen Aufwand und hat den Nachteil, dass das Endgerät und das Datengerät für die Verwendung der proprietären Schnittstelle konfiguriert sein müssen, z.B. über eine App-Installation.

Die Druckschrift WO 2015/085910 A1 beschreibt ein IoT-Kommunikationsverfahren (IoT = Internet of Things). Unter anderem wird in diesem Dokument offenbart, dass ein Endgerät eines Benutzers über das Einscannen eines verschlüsselten Barcodes und dessen Entschlüsselung in einem Cloud-Server die Identifikation eines Source-Terminals erhält, woraufhin das Endgerät mit dem Source-Terminal kommunizieren kann.

Die Druckschrift WO 2017/080403 A1 offenbart ein Verfahren zur Steuerung eines Projektionsgeräts. Das Projektionsgerät loggt sich auf einer IoT-Plattform (IoT = Internet of Things) unter Verwendung einer Login-Identifikation ein. Das Projektionsgerät empfängt anschließend Steuerkommandos, die von einer Vielzahl von Login-Identifikationen eines Instant-Messaging-Dienstes gesendet werden. Das Projektionsgerät sortiert diese Steuerkommandos entsprechend ihrer Sendezeit oder Empfangszeit. Anschließend verarbeitet das Projektionsgerät die Steuerkommandos.

Aufgabe der Erfindung ist es, einfach und flexibel einen Kommunikationskanal zwischen einem Datengerät und einem Endgerät eines Benutzers einzurichten.

Diese Aufgabe wird durch das Verfahren gemäß Patentanspruch 1 gelöst. Weiterbildungen der Erfindung sind in den abhängigen Ansprüchen definiert. Anspruch 13 offenbart ein System, Anspruch 15 offenbart ein Computerprogrammprodukt und Anspruch 16 offenbart ein Computerprogramm.

Das erfindungsgemäße Verfahren dient zum Einrichten eines Kommunikationskanals zwischen einem Datengerät und einem Endgerät eines Benutzers. Bei dem Datengerät handelt es sich um ein Gerät, das in einer Kommunikationsinfrastruktur eingebunden ist und mit anderen Einrichtungen kommunizieren kann. Vorzugsweise umfasst das Datengerät eine Sensorik zur Erfassung von Messwerten, die dann über den einzurichtenden Kommunikationskanal bereitzustellen sind. Darüber hinaus kann das Datengerät ggf. auch eine Aktorik umfassen, um bestimmte Aktionen auszuführen, wobei vorzugsweise entsprechende Befehle zur Steuerung der Aktorik über den eingerichteten Kommunikationskanal an das Datengerät gegeben werden können.

Vorzugsweise handelt es sich bei dem Datengerät um eine Komponente eines technischen Systems, aus dem Daten ausgelesen werden sollen bzw. welches geeignet konfiguriert oder gesteuert werden soll. Beispielsweise kann das Datengerät eine Komponente in einem Verkehrsmittel (z.B. in Zügen) oder eine Komponente in einer Fertigungsanlange oder dergleichen sein. Bei dem Endgerät handelt es sich vorzugsweise um ein mobiles Endgerät, wie z.B. ein Mobiltelefon, ein Laptop, ein Tablet und dergleichen.

Das im erfindungsgemäßen Verfahren verwendete Datengerät ist als ein jeweiliger maschineller Teilnehmer in einer oder mehreren ersten Gruppen von einem oder mehreren Messenger-Diensten registriert. Solche maschinellen Teilnehmer werden oftmals auch als Bots bzw. Chat-Bots bezeichnet. Die Gruppe eines Messenger-Dienstes zeichnet sich dadurch aus, dass jeder (menschliche oder maschinelle) Teilnehmer der Gruppe Informationen in der Gruppe bereitstellen kann, wobei dieses Bereitstellen häufig auch als Posten bezeichnet wird. Die bereitgestellten Informationen stehen dabei allen Teilnehmern der Gruppe zur Verfügung.

Darüber hinaus ist auf dem Datengerät ein maschinenlesbarer und verschlüsselter Code visuell dargestellt, wobei der Code (nach Entschlüsselung) eine Identifikation zur Spezifikation der ersten Gruppe oder Gruppen umfasst, in denen das Datengerät als maschineller Teilnehmer registriert ist. In einer bevorzugten Variante ist der auf dem Datengerät visuell dargestellte Code ein sog. QR-Code. Alternativ kann der Code jedoch auch eine andere Art von Code, wie z.B. ein Barcode, sein. Der auf dem Datengerät visuell dargestellte Code kann beispielsweise auf dem Datengerät aufgedruckt und/oder eingraviert und/oder aufgeklebt sein. Darüber hinaus ist es auch möglich, dass der auf dem Datengerät visuell dargestellte Code auf einem Display des Datengeräts wiedergegeben ist. Gegebenenfalls braucht das Display dabei nicht permanent eingeschaltet sein, sondern es kann bei Bedarf durch einen Benutzer aktiviert werden.

Im Rahmen des erfindungsgemäßen Verfahrens wird der auf dem Datengerät visuell dargestellte Code über eine Sensoreinrichtung des Endgeräts erfasst und durch das Endgerät in einer zweiten Gruppe eines Messenger-Dienstes bereitgestellt (d.h. gepostet). In dieser zweiten Gruppe ist der Benutzer als Teilnehmer registriert. Die Registrierung kann ggf. auch gleichzeitig mit dem Posten des Codes erfolgen. Vorzugsweise ist die zweite Gruppe eine andere als die oben genannte bzw. die oben genannten ersten Gruppen. Der Messenger-Dienst, in dem die zweite Gruppe gebildet ist, kann ggf. der gleiche Messenger-Dienst sein, in dem die erste oder ersten Gruppen gebildet sind. Jedoch kann es sich auch um einen anderen Messenger-Dienst handeln.

Die zweite Gruppe des Messenger-Dienstes umfasst zumindest einen maschinellen Teilnehmer, der den bereitgestellten, noch verschlüsselten Code mittels eines zugehörigen Schlüssels entschlüsselt, wodurch die im Code enthaltene Identifikation in unverschlüsselter Form erhalten wird. Schließlich wird der Benutzer als Teilnehmer in einer ersten Gruppe (d.h. der ersten oder einer der ersten Gruppen), die in der erhaltenen Identifikation spezifiziert ist, registriert. Hierdurch wird eine Kommunikation des Benutzers in dieser ersten Gruppe mit dem maschinellen Teilnehmer ermöglicht, als welcher das Datengerät in dieser ersten Gruppe registriert ist. Insbesondere kann ein Benutzer über geeignete Kommandos, die er in die erste Gruppe postet, das Datengerät dazu veranlassen, Daten bzw. Informationen in die Gruppe zu posten, die dann dem Benutzer über das Endgerät zur Verfügung stehen. Ebenso kann der Benutzer ggf. Kommandos posten, die dann dazu führen, dass eine bestimmte Konfiguration im Datengerät vorgenommen wird.

Das erfindungsgemäße Verfahren weist den Vorteil auf, dass über den Mechanismus von an sich bekannten Gruppen in Messenger-Diensten in Kombination mit einem auf dem Datengerät visuell dargestellten Code auf einfache Weise eine Kommunikation zwischen dem Datengerät und dem Endgerät eines Benutzers ermöglicht wird. Über die Verschlüsselung des Codes wird seine missbräuchliche Verwendung verhindert. Darüber hinaus wird durch die Festlegung einer zweiten Gruppe erreicht, dass nur ein bestimmter Benutzerkreis das Einrichten eines Kommunikationskanals zum Datengerät bewirken kann.

Die Ausstattung des Datengeräts mit dem maschinenlesbaren und verschlüsselten Code sowie die Registrierung des Datengeräts in einer oder mehreren ersten Gruppen kann Teil des Herstellungsprozesses des Datengeräts sein. Nichtsdestotrotz kann das Datengerät ggf. auch zu einem späteren Zeitpunkt entsprechend präpariert werden, um es zur Kommunikation mit dem Endgerät des Benutzers einzurichten.

In einer besonders bevorzugten Ausführungsform wird der auf dem Datengerät visuell dargestellte Code mit einer Sensoreinrichtung in der Form einer im Endgerät verbauten Kamera erfasst. Mit anderen Worten wird ein Foto von dem Code generiert, das anschließend in der zweiten Gruppe bereitgestellt wird, um aus dem Foto die darin enthaltene Identifikation durch Entschlüsselung mit einem zugehörigen Schlüssel zu gewinnen.

In einer weiteren, besonders bevorzugten Ausführungsform wird die Erfassung des Codes über die Sensoreinrichtung des Endgeräts und/oder die Bereitstellung des Codes in der zweiten Gruppe über eine Eingabe des Benutzers am Endgerät ausgelöst. Der Vorgang des Aufbaus des Kommunikationskanals wird somit durch den Benutzer geeignet gesteuert.

In einer besonders bevorzugten Ausführungsform erfolgt die Registrierung des Benutzers als Teilnehmer in der ersten Gruppe derart, dass der zumindest eine maschinelle Teilnehmer, der den Code entschlüsselt, den Benutzer als Teilnehmer der ersten Gruppe mittels der erhaltenen Identifikation (direkt) anmeldet. Mit anderen Worten ist bei diesem Prozess der Benutzer nicht zwischengeschaltet und die Registrierung als Teilnehmer der ersten Gruppe erfolgt automatisch.

In einer alternativen Variante erfolgt die Registrierung des Benutzers als Teilnehmer in der ersten Gruppe derart, dass der zumindest eine maschinellen Teilnehmer, der den Code entschlüsselt, die erhaltene Identifikation in der zweiten Gruppe bereitstellt (d.h. postet), wodurch die Identifikation an das Endgerät übermittelt wird, über das dann der Benutzer in der ersten Gruppe angemeldet wird. Die Anmeldung erfolgt dabei vorzugsweise ausgelöst durch eine Eingabe des Benutzers am Endgerät. Bei dieser Variante der Erfindung ist bei der Registrierung des Benutzers in der ersten Gruppe das Endgerät bzw. der Benutzer zwischengeschaltet.

In einer weiteren bevorzugten Ausgestaltung ist die zweite Gruppe eine Gruppe, auf die nur autorisierte Benutzer Zugriff haben. Hierdurch wird die Sicherheit des Verfahrens gegenüber unbefugten Zugriffen Dritter erhöht, da der Benutzer zum Bereitstellen des Codes in der zweiten Gruppe geeignet autorisiert sein muss.

In einer weiteren, besonders bevorzugten Ausführungsform wird der Benutzer als Teilnehmer in einer ersten Gruppe registriert, die zu dem gleichen Messenger-Dienst wie die zweite Gruppe gehört. Sollte das Datengerät in jeweiligen ersten Gruppen von mehreren Messenger-Diensten registriert sein, wird somit die erste Gruppe desjenigen Messenger-Dienstes zur Registrierung des Benutzers verwendet, zu der auch die zweite Gruppe gehört. Es kann somit ein einziges graphisches Messenger-Frontend auf dem Endgerät zur Kommunikation mit der ersten und zweiten Gruppe verwendet werden.

In einer weiteren Ausgestaltung des erfindungsgemäßen Verfahrens enthält die Identifikation neben der oder den ersten Gruppen eine Teilnehmerbezeichnung (d.h. eine Identifikation) zumindest eines maschinellen Teilnehmers, als welcher das Datengerät registriert ist. Vorzugsweise sind in der Identifikation die Teilnehmerbezeichnungen von allen maschinellen Teilnehmern enthalten, als welche das Datengerät registriert ist. Diese Variante der Erfindung kommt insbesondere dann zum Einsatz, wenn mehrere Datengeräte in der gleichen ersten Gruppe registriert sind. Hierdurch wird die Möglichkeit geschaffen, dass über das Endgerät mittels der Teilnehmerbezeichnung dasjenige Datengerät spezifiziert wird, auf das zugegriffen werden soll.

In einer weiteren bevorzugten Ausführungsform umfassen der oder die Messenger-Dienste, zu denen die erste oder ersten Gruppen und/oder die zweite Gruppe gehören, Telegram und/oder Skype-Messenger und/oder Slack und/oder Facebook-Messenger. Diese Messenger-Dienste sind an sich bekannt.

Neben dem oben beschriebenen Verfahren betrifft die Erfindung ein System zum Einrichten eines Kommunikationskanals zwischen einem Datengerät und einem Endgerät eines Benutzers. Das Datengerät und das Endgerät sind dabei Teil des Systems. In diesem System ist das Datengerät als ein jeweiliger maschineller Teilnehmer in einer oder mehreren ersten Gruppen von einem oder mehreren Messenger-Diensten registriert und ein maschinenlesbarer und verschlüsselter Code ist auf dem Datengerät visuell dargestellt. Der Code umfasst eine Identifikation zur Spezifikation der ersten Gruppe oder Gruppen, in denen das Datengerät als maschineller Teilnehmer registriert ist. Das System ist zur Durchführung des erfindungsgemäßen Verfahrens bzw. einer oder mehrerer bevorzugter Varianten des erfindungsgemäßen Verfahrens eingerichtet.

Die Erfindung betrifft darüber hinaus ein Datengerät, welches dazu eingerichtet ist, als das Datengerät in dem erfindungsgemäßen Verfahren bzw. in einer oder mehreren bevorzugten Ausführungsformen des erfindungsgemäßen Verfahrens zu arbeiten.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ferner betrifft die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

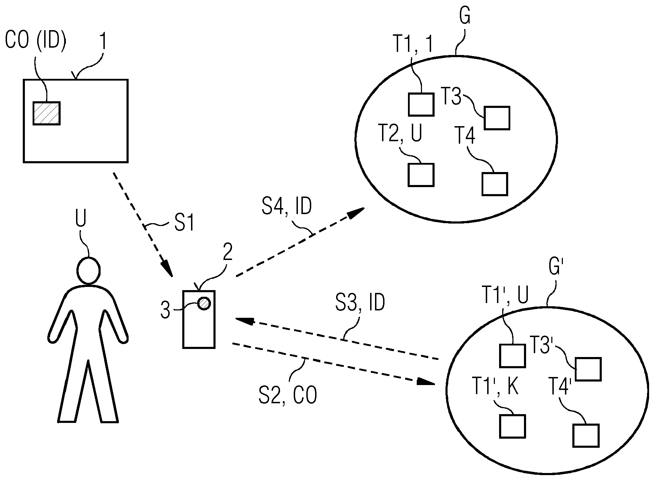

Ein Ausführungsbeispiel der Erfindung wird nachfolgend anhand der beigefügten Fig. 1 detailliert beschrieben. Diese Figur zeigt in schematischer Darstellung den Ablauf einer Variante des erfindungsgemäßen Verfahrens.

In Fig. 1 ist schematisch ein Datengerät 1 dargestellt, welches ein sog. IoT-Gerät (IoT = Internet of Things) ist. Dieses Gerät kann über eine (nicht gezeigte) Kommunikationsschnittstelle Daten bereitstellen. In einer bevorzugten Ausgestaltung enthält das Datengerät 1 eine Sensorik, um Messwerte zu erfassen und anschließend anderen Geräten bzw. Benutzern bereitzustellen. Gegebenenfalls kann das Datengerät auch eine Aktorik beinhalten, mit der bestimmte Aktionen ausgeführt werden können.

In der hier beschriebenen Ausführungsform soll die Möglichkeit geschaffen werden, dass ein Benutzer U auf im Datengerät 1 gespeicherte Daten zugreifen kann und ggf. auch Änderungen an den Daten vornehmen kann. Das Datengerät kann in einer Variante eine Komponente eines technischen Systems, wie z.B. einer Automatisierungsanlage, sein. In diesem Fall handelt es sich bei dem Benutzer U vorzugsweise um einen Servicetechniker, der die Konfiguration des Datengeräts 1 einsehen möchte und ggf. Änderungen vornehmen möchte.

Um den Datenzugriff auf das Datengerät 1 zu ermöglichen, muss ein Kommunikationskanal aufgebaut werden. Hierfür nutzt der Benutzer U ein mobiles Endgerät 2, bei dem es sich in dem Ausführungsbeispiel der Fig. 1 um ein Smartphone handelt. Um den Aufbau eines Kommunikationskanals zwischen dem Datengerät 1 und dem Endgerät 2 zu ermöglichen, ist auf dem Datengerät 1 ein maschinenlesbarer Code CO aufgebracht, der in Fig. 1 lediglich schematisch angedeutet ist. Zum Beispiel kann der Code auf dem Datengerät 1 aufgedruckt oder eingraviert sein. Gegebenenfalls ist es auch möglich, dass das Datengerät 1 über ein Display verfügt, auf dem der Code angezeigt wird.

In der hier beschriebenen Variante handelt es sich bei dem maschinenlesbaren Code CO um einen QR-Code. Dieser Code enthält die Identifikation ID einer Chat-Gruppe G eines an sich bekannten Messenger-Dienstes, wie z.B. Telegram, Skype-Messenger, Slack und dergleichen. Eine Chat-Gruppe zeichnet sich dadurch aus, dass jeder Teilnehmer der Gruppe Nachrichten bzw. Informationen in die Gruppe posten kann, wobei alle Teilnehmer der Gruppe diese Nachricht bzw. Information automatisch erhalten. Die Identifikation ID ist in verschlüsselter Form in dem QR-Code codiert, d.h. das Auslesen der Identifikation ist nur dann möglich, wenn ein zugeordneter Schlüssel zum Entschlüsseln zur Verfügung steht.

Die Chat-Gruppe G enthält als einzigen maschinellen Teilnehmer bzw. Bot den Teilnehmer T1, der dem Datengerät 1 entspricht. Das Datengerät 1 hat somit auch die Funktionalität eines Chat-Bots, um in der Chat-Gruppe G als maschineller Teilnehmer zu kommunizieren. Bei den anderen Teilnehmern T2, T3 und T4 handelt es sich im hier betrachteten Szenario um menschliche Teilnehmer der Chat-Gruppe G, wobei der Teilnehmer T2 dem Benutzer U entspricht, wie weiter unten noch näher erläutert wird. Gegebenenfalls besteht auch die Möglichkeit, dass in der Chat-Gruppe G noch weitere Datengeräte als Bots registriert sind. In diesem Fall enthält die im Code CO enthaltene Identifikation ID auch eine Teilnehmeridentifikation des Datengeräts 1, so dass verschiedene Datengeräte in der Chat-Gruppe G unterschieden werden können.

Im Verfahren der Fig. 1 erfasst der Benutzer U zunächst den auf dem Datengerät 1 aufgebrachten QR-Code CO mittels seines Endgeräts 2, was durch Schritt S1 angedeutet ist. Hierfür nutzt er die in dem Endgerät 2 verbaute Kamera 3, mit der er ein Foto von dem Code CO aufnimmt. Nach Erfassen des Codes mittels der Kamera 3 postet der Benutzer U in Schritt S2 den noch verschlüsselten Code in eine weitere Chat-Gruppe G' eines Messenger-Dienstes, in welcher der Benutzer U als menschlicher Teilnehmer T2' bereits vorab registriert ist oder in welcher der Benutzer automatisch durch das Posten des Codes CO als Teilnehmer T2' registriert wird. Zum Posten des Codes nutzt der Benutzer ein Messenger-Frontend auf seinem Endgerät 2. Der Messenger-Dienst für die Gruppe G' kann dabei dem Messenger-Dienst für die Gruppe G entsprechen oder ggf. auch ein anderer Dienst sein.

In der Chat-Gruppe G' gibt es einen maschinellen Teilnehmer bzw. Bot T1' in der Form eines Software-Programms, welches das Entschlüsseln des verschlüsselten Codes CO mit dem Schlüssel K durchführen kann. In der Gruppe G' sind noch weitere Teilnehmer registriert, wobei beispielhaft die Teilnehmer T3' und T4' dargestellt sind. Bei diesen Teilnehmern handelt es sich um weitere Benutzer, die bei Bedarf auch Zugriff auf Daten des Datengeräts 1 haben möchten.

Nach dem Posten des Codes CO in die Gruppe G' wird durch den maschinellen Teilnehmer T1' das Entschlüsseln des Codes CO durchgeführt, woraufhin die entschlüsselte Identifikation ID erhalten wird. Diese Identifikation ID wird automatisiert durch den Teilnehmer T1' in die Gruppe G' gepostet, so dass die Identifikation auch dem Messenger-Frontend im Endgerät 2 zur Verfügung steht, wie durch Schritt S3 angedeutet ist.

Um Zugriff auf das Datengerät 1 zu haben, wird der Benutzer U unter Verwendung der Identifikation ID der Gruppe G als Teilnehmer T2 in dieser Gruppe registriert, wie durch den Schritt S4 angedeutet ist. Diese Registrierung löst der Benutzer U durch Aufruf der Chat-Gruppe G mittels seines Messenger-Frontends auf dem Endgerät 2 aus. Anschließend kann der Benutzer als Teilnehmer T2 in die Chat-Gruppe posten bzw. Posts von dem Teilnehmer T1 und somit Informationen von dem Datengerät 1 empfangen.

In der hier beschriebenen Ausführungsform gibt es einen vorbestimmten Befehlssatz, mit dem der Benutzer U über gepostete Kommandos Informationen von dem Datengerät 1 abrufen kann bzw. Daten am Datengerät manipulieren kann. In einer bevorzugten Ausführungsform kann der Benutzer ein vorbestimmtes Hilfe-Kommando posten, woraufhin durch das Datengerät 1 der Umfang an möglichen Befehlen als Post in die Gruppe G gestellt wird. Diese Befehle kann der Benutzer über das Messenger-Frontend auf dem Endgerät 2 einsehen und dann je nach Wunsch entsprechende Kommandos zum Abruf von Daten vom Datengerät bzw. zur Konfiguration des Datengeräts als Posts in die Gruppe G absetzen, woraufhin das Datengerät 1 die an den Befehl gekoppelten Aktionen durchführt.

Wie oben dargelegt, spezifiziert die Identifikation ID lediglich die Chat-Gruppe G. Dies ist im Ausführungsbeispiel der Fig. 1 ausreichend, da nur das Datengerät 1 als maschineller Teilnehmer in der Gruppe G vorhanden ist. Sollten weitere Datengeräte 1 in der Gruppe G registriert sein, können diese über eine entsprechende Teilnehmeridentifikation bzw. Teilnehmerbezeichnung unterschieden werden. Diese Teilnehmerbezeichnung ist Bestandteil der Identifikation ID und wird über das Messenger-Frontend des Endgeräts 2 angezeigt, so dass der Benutzer dediziert ein bestimmtes Datengerät über Kommandos ansprechen kann, welche die Teilnehmerbezeichnung des Datengeräts enthalten.

Die im Vorangegangenen beschriebene Ausführungsform der Erfindung weist eine Reihe von Vorteilen auf. Insbesondere wird auf einfache Weise ein Kommunikationskanal zur Kommunikation eines Benutzers mit einem Datengerät unter Zwischenschaltung eines Endgeräts eingerichtet. Hierzu muss lediglich ein auf dem Datengerät aufgebrachter Code erfasst werden und in eine Chat-Gruppe gepostet werden. Ein Schutz vor Missbrauch wird dadurch erreicht, dass der Code verschlüsselt ist und nur mit einem geeigneten Schlüssel in der Chat-Gruppe entschlüsselt werden kann. Über den entschlüsselten Code steht dem Benutzer dann die Identifikation einer anderen Chat-Gruppe zur Verfügung, an der auch das Datengerät 1 als Chat-Bot registriert ist. Indem der Benutzer seine Registrierung in dieser Chat-Gruppe bewirkt, kann er schließlich mit dem Datengerät 1 über Posts kommunizieren.

## Patentansprüche

1. Verfahren zum Einrichten eines Kommunikationskanals zwischen einem Datengerät (1) und einem Endgerät (2) eines Benutzers (U), wobei das Datengerät (1) als ein jeweiliger maschineller Teilnehmer (T1) in einer oder mehreren ersten Gruppen (G) von einem oder mehreren Messenger-Diensten registriert ist und ein maschinenlesbarer und verschlüsselter Code (CO) auf dem Datengerät (1) visuell dargestellt ist, wobei der Code (CO) eine Identifikation (ID) zur Spezifikation der ersten Gruppe oder Gruppen (G) umfasst, in denen das Datengerät (1) als maschineller Teilnehmer (T1) registriert ist, wobei jeder Teilnehmer der ersten Gruppe oder Gruppen (G) Informationen in der ersten Gruppe oder Gruppen (G) bereitstellen kann und die bereitgestellten Informationen allen Teilnehmern der ersten Gruppe oder Gruppen (G) zur Verfügung stehen, wobei
- der Code (CO) über eine Sensoreinrichtung (3) des Endgeräts (2) erfasst wird und durch das Endgerät (2) in einer zweiten Gruppe (G') eines Messenger-Dienstes bereitgestellt wird, in welcher der Benutzer (U) als Teilnehmer (T2') registriert ist, wobei jeder Teilnehmer der zweiten Gruppe (G') Informationen in der zweiten Gruppe (G') bereitstellen kann und die bereitgestellten Informationen allen Teilnehmern der zweiten Gruppe (G') zur Verfügung stehen;
- durch zumindest einen maschinellen Teilnehmer (T1') der zweiten Gruppe (G') der bereitgestellte Code (CO) mittels eines zugehörigen Schlüssels (K) entschlüsselt wird und hierdurch die Identifikation (ID) erhalten wird;
- der Benutzer (U) als Teilnehmer (T2) in der ersten Gruppe oder Gruppen (G), die in der erhaltenen Identifikation (ID) spezifiziert ist, registriert wird, wodurch eine Kommunikation des Endgeräts (2) des Benutzers (U) in dieser ersten Gruppe oder Gruppen (G) mit dem maschinellen Teilnehmer (T1) ermöglicht wird, als welcher das Datengerät (1) in dieser ersten Gruppe oder Gruppen (G) registriert ist.

2. Verfahren nach Anspruch 1, **dadurch gekennzeichnet, dass** der auf dem Datengerät (1) visuell dargestellte Code (CO) ein QR-Code ist.

3. Verfahren nach Anspruch 1 oder 2, **dadurch gekennzeichnet, dass** der auf dem Datengerät (1) visuell dargestellte Code (CO) auf dem Datengerät (1) aufgedruckt und/oder eingraviert und/oder aufgeklebt ist.

4. Verfahren nach einem der vorhergehenden Ansprüche, **dadurch gekennzeichnet, dass** der auf dem Datengerät (1) visuell dargestellte Code (CO) auf einem Display des Datengeräts (1) wiedergegeben ist.

5. Verfahren nach einem der vorhergehenden Ansprüche, **dadurch gekennzeichnet, dass** der auf dem Datengerät (1) visuell dargestellte Code (CO) mit einer Sensoreinrichtung (3) in der Form einer Kamera des Endgeräts (2) erfasst wird.

6. Verfahren nach einem der vorhergehenden Ansprüche, **dadurch gekennzeichnet, dass** die Erfassung des Codes (CO) über die Sensoreinrichtung (3) des Endgeräts (2) und/oder die Bereitstellung des Codes (CO) in der zweiten Gruppe (G') über eine Eingabe des Benutzers (U) am Endgerät (2) ausgelöst wird.

7. Verfahren nach einem der vorhergehenden Ansprüche, **dadurch gekennzeichnet, dass** die Registrierung des Benutzers (U) als Teilnehmer (T2) in der ersten Gruppe (G) derart erfolgt, dass der zumindest eine maschinelle Teilnehmer, der den Code (CO) entschlüsselt, den Benutzer (U) als Teilnehmer (T2) der ersten Gruppe (G) mittels der erhaltenen Identifikation (ID) anmeldet.

8. Verfahren nach einem der Ansprüche 1 bis 6, **dadurch gekennzeichnet, dass** die Registrierung des Benutzers (U) als Teilnehmer (T2) in der ersten Gruppe (G) derart erfolgt, dass der zumindest eine maschinelle Teilnehmer (T1), der den Code (CO) entschlüsselt, die erhaltene Identifikation (ID) in der zweiten Gruppe (G') bereitstellt, wodurch die Identifikation (ID) an das Endgerät (2) übermittelt wird, über das der Benutzer (U) in der ersten Gruppe (G) angemeldet wird.

9. Verfahren nach einem der vorhergehenden Ansprüche, **dadurch gekennzeichnet, dass** die zweite Gruppe (G') eine Gruppe ist, auf die nur autorisierte Benutzer Zugriff haben.

10. Verfahren nach einem der vorhergehenden Ansprüche, **dadurch gekennzeichnet, dass** der Benutzer (U) als Teilnehmer (T2) in einer ersten Gruppe (G) registriert wird, die zu dem gleichen Messenger-Dienst wie die zweite Gruppe (G') gehört.

11. Verfahren nach einem der vorhergehenden Ansprüche, **dadurch gekennzeichnet, dass** die Identifikation (ID) neben der oder den ersten Gruppen eine Teilnehmerbezeichnung zumindest eines maschinellen Teilnehmers enthält, als welcher das Datengerät (1) registriert ist.

12. Verfahren nach einem der vorhergehenden Ansprüche, **dadurch gekennzeichnet, dass** der oder die Messenger-Dienste, zu denen die erste oder ersten Gruppen (G) und/oder die zweite Gruppe (G) gehören, Telegram und/oder Skype-Messenger und/oder Slack und/oder Facebook-Messenger umfassen.

13. System zum Einrichten eines Kommunikationskanals zwischen einem Datengerät (1) und einem Endgerät (2) eines Benutzers (U), wobei das Datengerät (1) als ein jeweiliger maschineller Teilnehmer (T1) in einer oder mehreren ersten Gruppen (G) von einem oder mehreren Messenger-Diensten registriert ist und ein maschinenlesbarer und verschlüsselter Code (CO) auf dem Datengerät (1) visuell dargestellt ist, wobei der Code (CO) eine Identifikation (ID) zur Spezifikation der ersten Gruppe oder Gruppen (G) umfasst, in denen das Datengerät (1) als maschineller Teilnehmer (T1) registriert ist, wobei jeder Teilnehmer einer ersten Gruppe oder Gruppen (G) Informationen in der ersten Gruppe oder Gruppen (G) bereitstellen kann und die bereitgestellten Informationen allen Teilnehmern der ersten Gruppe oder Gruppen (G) zur Verfügung stehen, wobei das System zur Durchführung eines Verfahrens eingerichtet ist, bei dem
- der Code (CO) über eine Sensoreinrichtung (3) des Endgeräts (2) erfasst wird und durch das Endgerät (2) in einer zweiten Gruppe (G') eines Messenger-Dienstes bereitgestellt wird, in welcher der Benutzer (U) als Teilnehmer (T2') registriert ist, wobei jeder Teilnehmer der zweiten Gruppe (G') Informationen in der zweiten Gruppe (G') bereitstellen kann und die bereitgestellten Informationen allen Teilnehmern der zweiten Gruppe (G') zur Verfügung stehen;
- durch zumindest einen maschinellen Teilnehmer (T1') der zweiten Gruppe (G') der bereitgestellte Code (CO) mittels eines zugehörigen Schlüssels (K) entschlüsselt wird und hierdurch die Identifikation (ID) erhalten wird;
- der Benutzer (U) als Teilnehmer (T2) in der ersten Gruppe oder Gruppen (G), die in der erhaltenen Identifikation (ID) spezifiziert ist, registriert wird, wodurch eine Kommunikation des Endgeräts (2) des Benutzers (U) in dieser ersten Gruppe oder Gruppen (G) mit dem maschinellen Teilnehmer (T1) ermöglicht wird, als welcher das Datengerät (1) in dieser ersten Gruppe oder Gruppen (G) registriert ist.

14. System nach Anspruch 13, **dadurch gekennzeichnet, dass** das System zur Durchführung eines Verfahrens nach einem der Ansprüche 2 bis 12 eingerichtet ist.

15. Computerprogrammprodukt mit einem auf einem maschinenlesbaren Träger gespeicherten Programmcode zur Durchführung eines Verfahrens nach einem der Ansprüche 1 bis 12, wenn der Programmcode auf mehr als einem Computer ausgeführt wird.

16. Computerprogramm mit einem Programmcode zur Durchführung eines Verfahrens nach einem der Ansprüche 1 bis 12, wenn der Programmcode auf mehr als einem Computer ausgeführt wird.

## Claims

1. Method for setting up a communication channel between a data unit (1) and a terminal (2) of a user (U), the data unit (1) being registered as a respective machine subscriber (T1) in one or more first groups (G) of one or more messenger services, and a machine-readable and encrypted code (CO) being visually displayed on the data unit (1), the code (CO) comprising an identification (ID) for specifying the first group or groups (G) in which the data unit (1) is registered as a machine subscriber (T1), each subscriber in the first group or groups (G) being able to provide information in the first group or groups (G) and the provided information being available to all subscribers in the first group or groups (G), wherein
- the code (CO) is captured using a sensor device (3) of the terminal (2) and is provided by the terminal (2) in a second group (G') of a messenger service, in which group the user (U) is registered as a subscriber (T2'), each subscriber in the second group (G') being able to provide information in the second group (G') and the provided information being available to all subscribers in the second group (G');
- at least one machine subscriber (T1') in the second group (G') decrypts the provided code (CO) by means of an associated key (K), and this results in the identification (ID) being obtained;
- the user (U) is registered as a subscriber (T2) in the first group or groups (G) specified in the obtained identification (ID),
thereby facilitating communication by the terminal (2) of the user (U) in this first group or groups (G) with the machine subscriber (T1) as which the data unit (1) is registered in this first group or groups (G).

2. Method according to Claim 1, **characterized in that** the code (CO) visually displayed on the data unit (1) is a QR code.

3. Method according to Claim 1 or 2, **characterized in that** the code (CO) visually displayed on the data unit (1) is printed and/or engraved and/or stuck on the data unit (1).

4. Method according to one of the preceding claims, **characterized in that** the code (CO) visually displayed on the data unit (1) is reproduced on a display of the data unit (1).

5. Method according to one of the preceding claims, **characterized in that** the code (CO) visually displayed on the data unit (1) is captured using a sensor device (3) in the form of a camera of the terminal (2).

6. Method according to one of the preceding claims, **characterized in that** the capture of the code (CO) using the sensor device (3) of the terminal (2) and/or the provision of the code (CO) in the second group (G') is triggered by way of an input by the user (U) on the terminal (2).

7. Method according to one of the preceding claims, **characterized in that** the user (U) is registered as a subscriber (T2) in the first group (G) in such a way that the at least one machine subscriber that decrypts the code (CO) signs on the user (U) as a subscriber (T2) of the first group (G) by means of the obtained identification (ID).

8. Method according to one of Claims 1 to 6, **characterized in that** the user (U) is registered as a subscriber (T2) in the first group (G) in such a way that the at least one machine subscriber (T1) that decrypts the code (CO) provides the obtained identification (ID) in the second group (G'), as a result of which the identification (ID) is transferred to the terminal (2) that is used to sign on the user (U) in the first group (G).

9. Method according to one of the preceding claims, **characterized in that** the second group (G') is a group to which only authorized users have access.

10. Method according to one of the preceding claims, **characterized in that** the user (U) is registered as a subscriber (T2) in a first group (G) that belongs to the same messenger service as the second group (G').

11. Method according to one of the preceding claims, **characterized in that** the identification (ID) contains, besides the first group or groups, a subscriber name of at least one machine subscriber as which the data unit (1) is registered.

12. Method according to one of the preceding claims, **characterized in that** the messenger service or services to which the first group or groups (G) and/or the second group (G) belong comprise Telegram and/or Skype Messenger and/or Slack and/or Facebook Messenger.

13. System for setting up a communication channel between a data unit (1) and a terminal (2) of a user (U), the data unit (1) being registered as a respective machine subscriber (T1) in one or more first groups (G) of one or more messenger services, and a machine-readable and encrypted code (CO) being visually displayed on the data unit (1), the code (CO) comprising an identification (ID) for specifying the first group or groups (G) in which the data unit (1) is registered as a machine subscriber (T1), each subscriber in the first group or groups (G) being able to provide information in the first group or groups (G) and the provided information being available to all subscribers in the first group or groups (G), wherein the system is configured to perform a method, in which
- the code (CO) is captured using a sensor device (3) of the terminal (2) and is provided by the terminal (2) in a second group (G') of a messenger service, in which group the user (U) is registered as a subscriber (T2'), each subscriber in the second group (G') being able to provide information in the second group (G') and the provided information being available to all subscribers in the second group (G');
- at least one machine subscriber (T1') in the second group (G') decrypts the provided code (CO) by means of an associated key (K), and this results in the identification (ID) being obtained;
- the user (U) is registered as a subscriber (T2) in the first group or groups (G) specified in the obtained identification (ID);
thereby facilitating communication by the terminal (2) of the user (U) in this first group or groups (G) with the machine subscriber (T1) as which the data unit (1) is registered in this first group or groups (G).

14. System according to Claim 13, **characterized in that** the system is configured to perform a method according to one of Claims 2 to 12.

15. Computer program product containing a program code, which is stored on a machine-readable carrier, for performing a method according to one of Claims 1 to 12 when the program code is executed on more than one computer.

16. Computer program having a program code for performing a method according to one of Claims 1 to 12 when the program code is executed on more than one computer.

## Revendications

1. Procédé pour établir un canal de communication entre un dispositif de données (1) et un terminal (2) d'un utilisateur (U), dans lequel le dispositif de données (1) est enregistré en tant qu'un participant machine (T1) respectif dans un ou plusieurs premier(s) groupe(s) (G) d'un ou plusieurs service(s) de messagerie et un code (CO) lisible sur machine et chiffré est représenté visuellement sur le dispositif de données (1), dans lequel le code (CO) comprend une identification (ID) pour spécifier le(s) premier(s) groupe(s) (G) dans lequel ou lesquels le dispositif de données (1) est enregistré en tant que participant machine (T1), dans lequel chaque participant du ou des premier(s) groupe(s) (G) peut fournir des informations dans le ou les premier(s) groupe(s) (G) et les informations fournies sont à disposition de tous les participants du ou des premier(s) groupe(s) (G), dans lequel
- le code (CO) est détecté par un dispositif de capteur (3) du terminal (2) et fourni par le terminal (2) dans un deuxième groupe (G') d'un service de messagerie dans lequel l'utilisateur (U) est enregistré en tant que participant (T2'), dans lequel chaque participant du deuxième groupe (G') peut fournir des informations dans le deuxième groupe (G') et les informations fournies sont à disposition de tous les participants du deuxième groupe (G') ;
- le code (CO) fourni est déchiffré par au moins un participant machine (T1') du deuxième groupe (G') au moyen d'une clé (K) correspondante et l'identification (ID) est obtenue par ce biais ;
- l'utilisateur (U) est enregistré en tant que participant (T2) dans le ou les premier(s) groupe(s) (G) qui est spécifié dans l'identification (ID) obtenue, ce par quoi une communication du terminal (2) de l'utilisateur (U) dans ce(s) premier(s) groupe(s) (G) avec le participant machine (T1) est possible sous lequel le dispositif de données (1) est enregistré dans ce(s) premier(s) groupe (s) (G).

2. Procédé selon la revendication 1, **caractérisé en ce que** le code (CO) représenté visuellement sur le dispositif de données (1) est un QR code.

3. Procédé selon la revendication 1 ou 2, **caractérisé en ce que** le code (CO) représenté visuellement sur le dispositif de données (1) est imprimé et/ou gravé et/ou collé sur le dispositif de données (1).

4. Procédé selon l'une des revendications précédentes, **caractérisé en ce que** le code (CO) représenté visuellement sur le dispositif de données (1) est restitué sur un écran du dispositif de données (1).

5. Procédé selon l'une des revendications précédentes, **caractérisé en ce que** le code (CO) représenté visuellement sur le dispositif de données (1) est détecté avec un dispositif de capteur (3) sous la forme d'une caméra du terminal (2).

6. Procédé selon l'une des revendications précédentes, **caractérisé en ce que** la détection du code (CO) par le dispositif de capteur (3) du terminal (2) et/ou la fourniture du code (CO) dans le deuxième groupe (G') est déclenchée par une saisie de l'utilisateur (U) sur le terminal (2).

7. Procédé selon l'une des revendications précédentes, **caractérisé en ce que** l'enregistrement de l'utilisateur (U) en tant que participant (T2) dans le premier groupe (G) est effectué de telle façon que l'au moins un participant machine qui déchiffre le code (CO), connecte l'utilisateur (U) en tant que participant (T2) du premier groupe (G) au moyen de l'identification (ID) reçue.

8. Procédé selon l'une des revendications 1 à 6, **caractérisé en ce que** l'enregistrement de l'utilisateur (U) en tant que participant (T2) dans le premier groupe (G) est effectué de telle façon que l'au moins un participant machine (T1) qui déchiffre le code (CO), fournit l'identification (ID) reçue dans le deuxième groupe (G'), ce par quoi l'identification (ID) est transmise au terminal (2) par lequel l'utilisateur (U) est connecté dans le premier groupe (G).

9. Procédé selon l'une des revendications précédentes, **caractérisé en ce que** le deuxième groupe (G') est un groupe auquel seuls des utilisateurs autorisés ont accès.

10. Procédé selon l'une des revendications précédentes, **caractérisé en ce que** l'utilisateur (U) est enregistré en tant que participant (T2) dans un premier groupe (G) qui appartient au même service de messagerie que le deuxième groupe (G').

11. Procédé selon l'une des revendications précédentes, **caractérisé en ce que** l'identification (ID) contient, en plus du ou des premier(s) groupe(s), une désignation de participant au moins d'un participant machine sous lequel le dispositif de données (1) est enregistré.

12. Procédé selon l'une des revendications précédentes, **caractérisé en ce que** le(s) service(s) de messagerie auquel ou auxquels le(s) premier(s) groupe(s) (G) et/ou le deuxième groupe (G) appartient/appartiennent, comprennent Telegram et/ou Skype-Messenger et/ou Slack et/ou Facebook-Messenger.

13. Système pour établir un canal de communication entre un dispositif de données (1) et un terminal (2) d'un utilisateur (U), dans lequel le dispositif de données (1) est enregistré en tant qu'un participant machine (T1) respectif dans un ou plusieurs premier(s) groupe(s) (G) d'un ou plusieurs service(s) de messagerie et un code (CO) lisible sur machine et chiffré est représenté visuellement sur le dispositif de données (1), dans lequel le code (CO) comprend une identification (ID) pour spécifier le(s) premier(s) groupe(s) (G) dans lequel ou lesquels le dispositif de données (1) est enregistré en tant que participant machine (T1), dans lequel chaque participant d'un ou de premier(s) groupe(s) (G) peut fournir des informations dans le ou les premier(s) groupe(s) (G) et les informations fournies sont à disposition de tous les participants du ou des premier(s) groupe(s) (G), dans lequel le système pour exécuter un procédé est installé, avec lequel
- le code (CO) est détecté par un dispositif de capteur (3) du terminal (2) et fourni par le terminal (2) dans un deuxième groupe (G') d'un service de messagerie dans lequel l'utilisateur (U) est enregistré en tant que participant (T2'), dans lequel chaque participant du deuxième groupe (G') peut fournir des informations dans le deuxième groupe (G') et les informations fournies sont à disposition de tous les participants du deuxième groupe (G') ;
- le code (CO) fourni est déchiffré par au moins un participant machine (T1') du deuxième groupe (G') au moyen d'une clé (K) correspondante et l'identification (ID) est obtenue par ce biais ;
- l'utilisateur (U) est enregistré en tant que participant (T2) dans le ou les premier(s) groupe(s) (G) qui est spécifié dans l'identification (ID) obtenue, ce par quoi une communication du terminal (2) de l'utilisateur (U) dans ce(s) premier(s) groupe(s) (G) avec le participant machine (T1) est possible en tant que lequel le dispositif de données (1) est enregistré dans ce(s) premier(s) groupe(s) (G).

14. Système selon la revendication 13, **caractérisé en ce que** le système pour exécuter un procédé est conçu selon l'une des revendications 2 à 12.

15. Produit de programme informatique comprenant un code de programme enregistré sur un support lisible sur machine pour exécuter un procédé selon l'une des revendications 1 à 12, lorsque le code de programme est exécuté sur plus d'un ordinateur.

16. Programme informatique comprenant un code de programme pour exécuter un procédé selon l'une des revendications 1 à 12, lorsque le code de programme est exécuté sur plus d'un ordinateur.
